# EUROPÄISCHE PATENTANMELDUNG

(11) **EP 2 634 898 A1**
(43) Veröffentlichungstag der Anmeldung: **04.09.2013**
(21) Anmeldenummer: 12157620.1
(22) Anmeldetag: 01.03.2012
(51) Int. Cl.: H02K 11/00, G01H 1/00

(54) **Verfahren zum Betreiben einer elektrischen Maschine**

(71) Anmelder: Siemens Aktiengesellschaft, 80333 München (DE)
(72) Erfinder: Strack, Sebastian, 40225 Düsseldorf (DE)

(57) **Zusammenfassung**

Ein Verfahren zum Betreiben einer elektrischen Maschine aufweisend einen Stator 1 mit einer Wicklung aus elektrischen Leitern, welche zwei gegenüberliegende Wickelköpfe 2 aufweist, weist folgende Schritte auf: Zeitgleiches Erfassen von Schwingungsmessgrößen mit denen die Ellipsierungsschwingungsmoden der beiden Wickelköpfe 2 bestimmbar sind in Abhängigkeit von der Zeit; Bestimmen der Ellipsenneigungen und der Phasenlagen der Ellipsierungsschwingungsmoden der beiden Wickelköpfe 2; Ermitteln von kritischen Betriebszuständen der elektrischen Maschine, bei denen die Ellipsenneigungen und die Phasenlagen der Ellipsierungsschwingungsmoden der beiden Wickelköpfe im Wesentlichen gleich sind; Betreiben der elektrischen Maschine derart, dass die kritischen Betriebszustände mittels einer Variation der Blindleistung der elektrischen Maschine vermieden werden.

## Beschreibung

Die Erfindung betrifft ein Verfahren zum Betreiben einer elektrischen Maschine.

In einem Gaskraftwerk oder einem Gas-und-Dampf-Kombinationskraftwerk wird zur Erzeugung von elektrischer Energie mittels einer Gasturbine oder einer Dampfturbine ein elektrischer Generator angetrieben. Die in der Gasturbine anfallende Abwärme wird in dem Kombinationskraftwerk dazu verwendet, um eine Dampfturbine anzutreiben, welche einen weiteren elektrischen Generator antreiben kann. Die Generatoren weisen jeweils einen Stator und einen Rotor auf, wobei der Rotor mit einer Welle der jeweiligen Turbine gekuppelt ist und eine Erregerwicklung oder Permanentmagneten aufweist. Der Stator weist eine Wicklung elektrischer Leiter auf, die an den beiden axialen Enden des Stators jeweils einen Wickelkopf aufweist.

Aufgrund des verstärkten Einsatzes von regenerativen Energiequellen wie beispielsweise Windenergie oder Solarenergie ist es vermehrt erforderlich, dass das Kraftwerk Energieschwankungen aus den regenerativen Energiequellen ausgleicht. Dazu wechselt das Kraftwerk häufig seinen Betriebszustand, um zu verschiedenen Zeitpunkten verschieden hohe Leistungen zu liefern. Dies hat zur Folge, dass die Komponenten des Kraftwerks einer hohen Belastung und somit einem hohen Verschleiß ausgesetzt sind. Insbesondere die Wickelköpfe der Generatoren sind verschiedenen Verschleißprozessen unterworfen, wie beispielsweise einer Schwingung durch die in dem Generator auftretenden Stromkräfte oder durch eine Schwingung des Rotors.

Aufgabe der Erfindung ist es, ein Verfahren zum Betreiben einer elektrischen Maschine mit einem Stator und einem Rotor zu schaffen, wobei die Wickelköpfe des Stators eine lange Lebensdauer haben.

Das erfindungsgemäße Verfahren zum Betreiben einer elektrischen Maschine aufweisend einen Stator mit einer Wicklung aus elektrischen Leitern, welche zwei gegenüberliegende Wickelköpfe aufweist, ist wie folgt durchzuführen: Zeitgleiches Erfassen von Schwingungsmessgrößen mit denen die Ellipsierungsschwingungsmoden der beiden Wickelköpfe bestimmbar sind in Abhängigkeit von der Zeit; Bestimmen der Ellipsenneigungen und der Phasenlagen der Ellipsierungsschwingungsmoden der beiden Wickelköpfe; Ermitteln von kritischen Betriebszuständen der elektrischen Maschine, bei denen die Ellipsenneigungen und die Phasenlagen der Ellipsierungsschwingungsmoden der beiden Wickelköpfe im Wesentlichen gleich sind; Betreiben der elektrischen Maschine derart, dass die kritischen Betriebszustände mittels einer Variation der Blindleistung der elektrischen Maschine vermieden werden.

Bei der elektrischen Maschine kann es sich sowohl um einen Synchronmotor als auch um einen Generator handeln. Bei der Schwingung der Wickelköpfe handelt es sich um eine erzwungene Schwingung, die durch eine periodische Anregung entsteht. Die Bewegungen, die Wickelköpfe durchführen, werden als Betriebsschwingungsformen bezeichnet. Aufgrund der periodischen Anregung sind die Betriebsschwingungsformen nicht unbedingt Eigenformen der Wickelköpfe. Die Betriebsschwingungsformen der Wickelköpfe ergeben sich aus einer Überlagerung von verschiedenen Betriebsschwingungsmoden. Gemäß der Erfindung werden die Schwingungsmessgrößen derart aufbereitet, dass aus den verschiedenen Betriebsschwingungsmoden die Ellipsierungsschwingungsmoden extrahiert werden. In einem zweipoligen Generator ist die Ellispierschwingungsmode die dominierende Betriebsschwingungsmode, d.h. die am meisten zum Verschleiß der Wickelköpfe beitragende Betriebsschwingungsmode. Die Ellipsierungsschwingungsmoden sind jeweils durch eine Schwingungsfrequenz charakterisiert und durch die Ellipsenneigungen, d.h. die Lage der Achsen der Ellipsen im Raum. Bei zweipoligen Generatoren beträgt die Schwingungsfrequenz der Ellipsierungsschwingungsmode das Zweifache der Netzfrequenz, dementsprechend insbesondere 100 Hz bei 50 Hz Generatoren oder 120 Hz bei 60 Hz Generatoren. Sind die entsprechenden Achsen der Ellipsen der beiden Wickelköpfe zueinander um 90 ° versetzt, so ist die Schwingung unkritisch. Bei manchen Betriebszuständen weisen die beiden Ellipsierungsschwingungsmoden im Wesentlichen die gleiche Ellipsenneigung und die gleiche Phasenlage auf. Ist dies der Fall, so unterliegen die Wickelköpfe einer hohen mechanischen Belastung durch die Überlagerung von Anregungskraftvektoren von zwei verschiedenen Anregungsmechanismen, nämlich einer Ellipsierung des Blechpakets der elektrischen Maschine und von Stromkräften, die auf die Wickelköpfe wirken. Indem die kritischen Betriebszustände identifiziert werden, können sie durch die Variation der Blindleistung vermieden werden, wodurch die elektrische Maschine eine lange Lebensdauer hat.

Die Variation der Blindleistung kann durch eine Erhöhung oder durch eine Erniedrigung des Erregerstroms bewerkstelligt werden. Der Erregerstrom fließt durch eine Erregerwicklung und erzeugt in der elektrischen Maschine ein zeitlich konstantes Magnetfeld. Handelt es sich bei der elektrischen Maschine um einen Generator, so kann der Betreiber des Generators ebenfalls eine Variation der Blindleistungsaufnahme bzw. der Blindleistungsabgabe mit dem Lastverteiler absprechen. Beispielsweise könnte eine Erniedrigung der Blindleistung durch eine Erhöhung der Blindleistung durch einen anderen Generator kompensiert werden.

Bevorzugt werden die Schwingungsmessgrößen der Wickelköpfe an mindestens acht und maximal zwölf gleichmäßig über den Umfang jeder der Wickelköpfe verteilten und jeweils in derselben Axialposition angeordneten Messstellen erfasst.

Bevorzugtermaßen weist der Stator ein Blechpaket und das Verfahren folgende Schritte auf: Erfassen von Schwingungsmessgrößen, mit denen die Ellipsierungsschwingungsmode des Blechpakets bestimmbar ist in Abhängigkeit von der Zeit und zeitgleich mit dem Erfassen der Schwingungsmessgrößen, mit denen die Ellipsierungsschwingungsmoden der beiden Wickelköpfe bestimmbar sind; Ermitteln von weiteren kritischen Betriebszuständen der elektrischen Maschine, bei denen die Ellipsenneigungen und die Phasenlagen der Ellipsierschwingungsmoden des Blechpakts und mindestens einer der Wickelköpfe im Wesentlichen gleich sind; Betreiben der elektrischen Maschine derart, dass die weiteren kritischen Betriebszustände mittels einer Variation der Blindleistung vermieden werden. Die Schwingung der Wickelköpfe ist ein Resultat verschiedener Anregungsmechanismen. Indem die Schwingung sowohl der Wickelköpfe als auch des Wicklungskerns aufgenommen wird, ist vorteilhaft eine Analyse hinsichtlich der verschiedenen Anregungsmechanismen möglich. Die verschiedenen Anregungsmechanismen können auf die Wickelköpfe wirkende Stromkräfte und eine Ellipsierung des Wicklungskerns sein. Die weiteren kritischen Betriebszustände ergeben sich dadurch, dass diese beiden Anregungsmechanismen synchron ablaufen und werden durch die bevorzugte Ausführungsform des Verfahrens vorteilhaft vermieden.

Bevorzugtermaßen werden die Schwingungsmessgrößen des Blechpakets in einer Axialposition erfasst, die in der Mitte zwischen den beiden Wickelköpfen liegt. An dieser Stelle ist die Schwingung des Bleckpakets vorteilhaft gering beeinflusst von dem Anregungsmechanismus, der von den auf die Wickelköpfe wirkenden Stromkräften herrührt und spiegelt damit im Wesentlichen die Ellipsierung des Blechpakets wider. Die Schwingungsmessgrößen des Blechpakets werden bevorzugt an mindestens acht und maximal zwölf gleichmäßig über den Umfang des Wicklungskerns verteilten und in derselben Axialposition angeordneten Messstellen erfasst.

Das Verfahren weist bevorzugt folgende Schritte auf: Erfassen des Polradwinkels und des Phasenwinkels der elektrischen Maschine; Erstellen eines Kennfelds, in dem die kritischen und die weiteren kritischen Betriebszustände der elektrischen Maschine in Abhängigkeit des Polradwinkels und des Phasenwinkels aufgetragen sind, und Vermeiden dieser Betriebszustände anhand des Kennfelds. Ein Betriebszustand der elektrischen Maschine ist insbesondere durch den Polradwinkel und den Phasenwinkel charakterisiert. Der Polradwinkel ist dabei ein Maß für den Lastzustand der elektrischen Maschine, der Phasenwinkel bezeichnet die Phasendifferenz aus der elektrischen Spannung und des elektrischen Stroms der elektrischen Maschine und ist ein Maß für die Blindleistung.

Zum Bestimmen der Ellipsierungsschwingungsmoden weist das Verfahren bevorzugt den Schritt auf: Transformieren der Schwingungsmessgrößen in ein Frequenzspektrum. Es handelt es sich hierbei um eine Fourier Transformation. Nach der Fourier Transformation lassen sich die Ellipsierungsschwingungsmoden vorteilhaft einfach von den verbliebenen Schwingungsmoden separieren.

Bevorzugtermaßen sind die Schwingungsmessgrößen Auslenkungen, Geschwindigkeiten und/oder Beschleunigungen der Messstellen. Die Beschleunigungen können beispielsweise mit faseroptischen Beschleunigungsmessern aufgenommen werden. Ebenso können die Beschleunigungen mit Hilfe von piezoelektrischen Kristallen gemessen werden. Aber auch andere Messmethoden, wie beispielsweise Messmethoden auf der Basis von Ultraschall oder Radar oder mittels induktiver Abstandssensoren sind denkbar.

Die in radialer Richtung auftretenden Auslenkungen, die in radialer Richtung auftretenden Geschwindigkeiten und/oder die in radialer Richtung auftretenden Beschleunigungen werden bevorzugt erfasst. Die die Schwingungen verursachenden Kräfte treten hauptsächlich in radialer Richtung auf, so dass eine Verformung des Stators hauptsächlich ebenfalls in radialer Richtung auftritt.

Die kritischen Betriebszustände und/oder die weiteren kritischen Betriebszustände werden bevorzugt durch eine Variation der Wirkleistung vermieden. Somit ergibt sich vorteilhaft neben der Blindleistung ein zweiter Freiheitsgrad, der derart variiert werden kann, dass die kritischen Betriebszustände vermieden werden. Folgegemäß ergibt sich beim Betreiben der elektrischen Maschine eine höhere Flexibilität.

Im Folgenden wird anhand der beigefügten schematischen Zeichnungen das erfindungsgemäße Verfahren näher erläutert. Es zeigen:
- Figur 1: einen Längsschnitt eines Stators einer elektrischen Maschine und
- Figuren 2 bis 4: jeweils einen Betriebszustand der elektrischen Maschine anhand jeweils eines Zeigerbildes in der komplexen Zahlenebene und jeweils zweier Querschnitte durch den Stator.

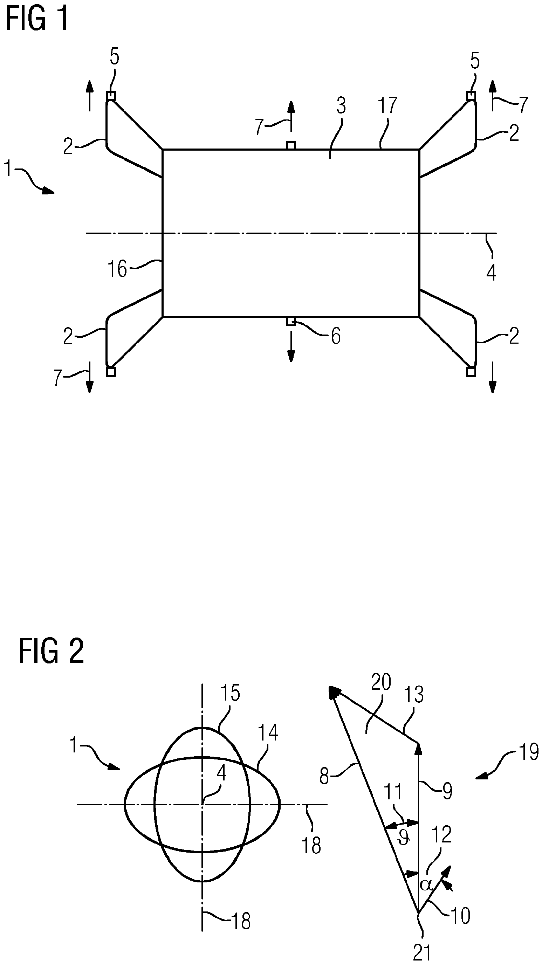

Wie es aus Figur 1 ersichtlich ist, weist eine elektrische Maschine einen Stator 1 auf. Die elektrische Maschine weist ebenfalls eine Maschinenachse 4 und einen Rotor (in Figur 1 nicht dargestellt) auf, welcher im Betrieb der elektrischen Maschine um die Maschinenachse 4 rotiert. Der Stator 1 ist radial außerhalb des Rotors und ebenfalls symmetrisch um die Maschinenachse 4 angeordnet. Der Stator 1 weist eine Wicklung elektrischer Leiter um ein Blechpaket 3 auf, wobei die Wicklung an den beiden Stirnseiten 16 des Stators 1 jeweils einen Wickelkopf 2 aufweist.

Im Betrieb der elektrischen Maschine treten an dem Stator 1 Kräfte auf, die Schwingungen des Stators 1 verursachen können. In Figur 1 sind beispielhaft verschiedene Kraftvektoren 7 dargestellt, die an verschiedenen Stellen des Stators 1 angreifen. An jedem der beiden Wickelköpfe 2 sind zwei gegenüberliegend angeordnete Kraftvektoren 7 dargestellt, welche betragsmäßig gleich sind und jeweils nach radial außen gerichtet sind. Es ist jedoch ebenso denkbar, dass die Kraftvektoren 7 des einen Wickelkopfes 2 nach radial außen und die Kraftvektoren 7 des anderen Wickelkopfes 2 nach radial innen gerichtet sind. Am Blechpaket 3 und in der Mitte zwischen den beiden Wickelköpfen 2 sind ebenfalls zwei gegenüberliegend angeordnete Kraftvektoren 7 dargestellt, die betragsmäßig gleich und nach radial außen gerichtet sind. Hier ist ebenfalls möglich, dass die Kraftvektoren nach radial innen gerichtet sind.

Zur Aufnahme der Schwingungen des Stators 1 sind an den Wickelköpfen 2 mindestens acht gleichmäßig über den Umfang verteilte Wickelkopfschwingungssensoren 5 angeordnet. Weiterhin sind an der Radialaußenseite 17 des Blechpakets 3, in der Mitte zwischen den beiden Wickelköpfen 2 ebenfalls mindestens acht gleichmäßig über den Umfang des Blechpakets 3 angeordnete Blechpaketschwingungssensoren 6 angeordnet. Durch das Vorsehen von jeweils acht Schwingungssensoren 5, 6 kann die Eigenform der Schwingung in der jeweiligen Axialposition des Stators 1 mit einer ausreichenden Genauigkeit aufgenommen werden. Es ist prinzipiell auch möglich, an weiteren axialen Positionen des Stators 1 Blechpaketschwingungssensoren anzuordnen. Die Schwingungssensoren 5, 6 können Auslenkungen, Geschwindigkeiten und/oder Beschleunigungen in Abhängigkeit von der Zeit aufnehmen. Erfindungsgemäß ist, dass die Schwingungssensoren 5, 6 die Schwingungsmessgrößen zeitgleich aufnehmen. Bevorzugt werden jeweils die in radialer Richtung auftretenden Auslenkungen, Geschwindigkeiten und/oder Beschleunigungen aufgenommen. Aus diesen Daten können dann die Betriebsschwingungsformen und die Frequenzen für die Schwingungen der beiden Wickelköpfe 2 und des Blechpakets 3 in der Axialposition, an dem die Blechpaketschwingungssensoren 6 angeordnet sind, rekonstruiert werden.

In Figuren 2 bis 4 sind die Schwingungen des Stators 1 bei drei verschiedenen Betriebszuständen der elektrischen Maschine dargestellt. Die Schwingungen zeichnen sich dadurch aus, dass im Verlauf der Schwingungen die ursprünglichen kreisrunden Querschnitte des Stators 1 zu einer Ellipse ovalisiert werden. Figuren 2 bis 4 zeigen jeweils einen Wickelkopfquerschnitt 14 durch einen der beiden Wickelköpfe 2 und ein Blechpaketquerschnitt 15 in der Axialposition, in der in Figur 1 die Blechpaketschwingungssensoren 6 angeordnet sind. Die Querschnitte 14, 15 sind zu einem Zeitpunkt der Schwingungen aufgenommen, bei dem die Querschnitte 14, 15 in Figuren 2 bis 4 elliptisch sind. Die elliptischen Querschnitte 14, 15 weisen jeweils eine Hauptachse 18 und einen Mittelpunkt auf, der auf der Maschinenachse 4 liegt.

Jeder der drei Betriebszustände aus Figuren 2 bis 4 ist jeweils durch ein 2eigerdiagramm 19 beschrieben. Jeder der drei Betriebszustände ist durch einen Polradspannungsvektor 8, einen Ständerspannungsvektor 9 und einen Stromvektor 10 charakterisiert, die jeweils in einer komplexen Zahlenebene 20 liegen und von dem Ursprung 21 der komplexen Zahlenebene 20 ausgehen. In den 2eigerdiagrammen 19 ist ebenfalls jeweils ein Reaktanzstromproduktvektor 13 dargestellt, welcher die Spitzen des Polradsspannungsvektors 8 und des Ständerspannungsvektors 9 miteinander verbindet. Der Reaktanzstromproduktvektor 13 ist das Produkt aus Reaktanz (Blindwiderstand) und Strom.

Zwischen dem Polradspannungsvektor 8 und dem Ständerspannungsvektor 9 ist ein Polradwinkel 11 und zwischen dem Ständerspannungsvektor 9 und dem Stromvektor ein Phasenwinkel 12 ausgebildet. Im dem Fall, dass sich die elektrische Maschine im Leerlauf befindet, ist der Polradwinkel Null. In dem Fall, dass sich die elektrische Maschine im Generatorbetrieb befindet, dreht sich der Polradspannungsvektor 8 vor dem Ständerspannungsvektor 9, in dem Fall, dass sich die elektrische Maschine im Motorbetrieb befindet, dreht sich der Polradspannungsvektor 8 nach dem Ständerspannungsvektor 9. In Figuren 2 bis 4 ist der Fall des Generatorbetriebs dargestellt, mit dem Polradspannungsvektor 8, der im Vergleich zu dem Ständerspannungsvektor 9 im Uhrzeigersinn gedreht ist und mit einem spitz ausgebildeten Polradwinkel 11. Der Polradwinkel 11 ist ein Maß für die Wirkleistung der elektrischen Maschine. In dem Fall, dass die elektrische Maschine Strom an induktive oder kapazitive Verbraucher liefert, nimmt der Phasenwinkel 12 von Null verschiedene Werte an. Das bedeutet, dass der elektrische Strom und die elektrische Spannung zueinander verschobene Phasen aufweisen. Der Phasenwinkel 12 ist ein Maß für die Blindleistung der elektrischen Maschine.

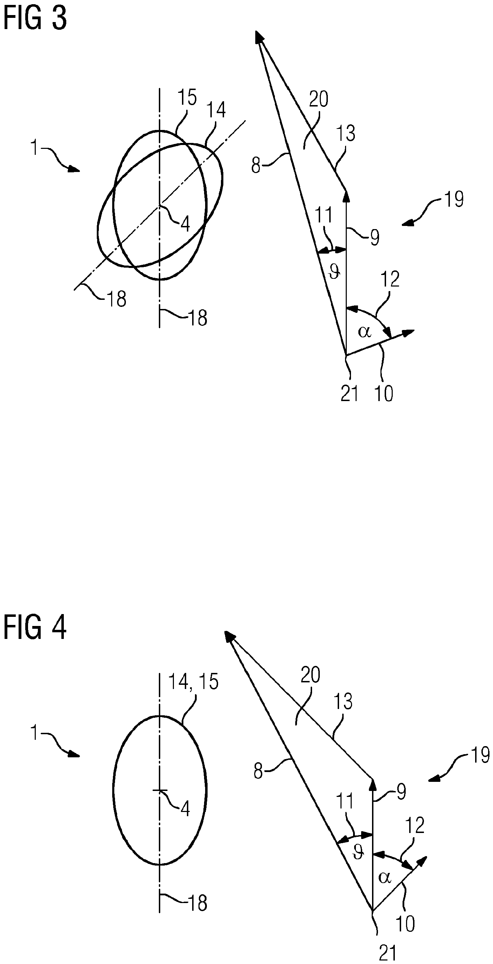

Die drei Betriebszustände aus Figuren 2 bis 4 sind jeweils durch verschiedene Polradwinkel 11 und Phasenwinkel 12 charakterisiert. Die drei Betriebszustände stellen dabei Betriebszustände dar, die beim Hochfahren der elektrischen Maschine durchlaufen werden. In dem ersten Betriebszustand aus Figur 2 schließen die Hauptachsen 18 der beiden elliptischen Querschnitte 14, 15 einen rechten Winkel ein. In dem zweiten Betriebszustand aus Figur 3 schließen die beiden elliptischen Querschnitte 14, 15 einen spitzen Winkel ein. In dem dritten Betriebszustand aus Figur 4 liegen die Hauptachsen der beiden elliptischen Querschnitte 14, 15 aufeinander. Dieser dritte Betriebszustand zeichnet sich dadurch aus, dass die Schwingung des Wicklungskerns 3 und die Schwingung des Wickelkopfes im Wesentlichen die gleiche Ellipsenneigung aufweisen und phasengleich sind. Dieser dritte Betriebszustand ist daher ein kritischer Betriebszustand und wird durch das erfindungsgemäße Verfahren durch eine Variation der Blindleistung vermieden. Kritische Betriebszustände ergeben sich auch, wenn die Schwingungen der beiden Wickelköpfe 2 im Wesentlichen die gleiche Ellipsenneigung aufweisen und phasengleich sind.

Bevorzugt ist das erfindungsgemäße Verfahren zum Betreiben einer elektrischen Maschine aufweisend einen Stator 1 mit einer Wicklung aus elektrischen Leitern, welche zwei gegenüberliegende Wickelköpfe 2 aufweist, wie folgt durchzuführen: Zeitgleiches Erfassen von Schwingungsmessgrößen mittels zwölf gleichmäßig über den Umfang jeder der Wickelköpfe verteilten und jeweils in derselben Axialposiiton angeordneten Messstellen mit denen die Ellipsierungsschwingungsmoden der beiden Wickelköpfe 2 bestimmbar sind in Abhängigkeit von der Zeit; dazu zeitgleiches Erfassen von Schwingungsmessgrößen mittels zwölf gleichmäßig über den Umfang des Blechpakets verteilten und in der Mitte zwischen den beiden Wickelköpfen 2 angeordneten Messstellen mit denen die Ellipsierungsschwingungsmode des Blechpakets 3 bestimmbar ist in Abhängigkeit von der Zeit; Bestimmen der Ellipsenneigungen und der Phasenlagen der Ellipsierungsschwingungsmoden der beiden Wickelköpfe 2 und des Blechpakets 3; - Ermitteln von kritischen Betriebszuständen der elektrischen Maschine, bei denen die Ellipsenneigungen und die Phasenlagen der Ellipsierungsschwingungsmoden der beiden Wickelköpfe 2 oder des Blechpakets 3 und mindestens einer der Wickelköpfe 2 im Wesentlichen gleich sind; Betreiben der elektrischen Maschine derart, dass die kritischen Betriebszustände mittels einer Variation der Blindleistung der elektrischen Maschine vermieden werden.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Verfahren zum Betreiben einer elektrischen Maschine aufweisend einen Stator (1) mit einer Wicklung aus elektrischen Leitern, welche zwei gegenüberliegende Wickelköpfe (2) aufweist, mit den Schritten:
- Zeitgleiches Erfassen von Schwingungsmessgrößen mit denen die Ellipsierungsschwingungsmoden der beiden Wickelköpfe (2) bestimmbar sind in Abhängigkeit von der Zeit;
- Bestimmen der Ellipsenneigungen und der Phasenlagen der Ellipsierungsschwingungsmoden der beiden Wickelköpfe (2);
- Ermitteln von kritischen Betriebszuständen der elektrischen Maschine, bei denen die Ellipsenneigungen und die Phasenlagen der Ellipsierungsschwingungsmoden der beiden Wickelköpfe im Wesentlichen gleich sind;
- Betreiben der elektrischen Maschine derart, dass die kritischen Betriebszustände mittels einer Variation der Blindleistung der elektrischen Maschine vermieden werden.

2. Verfahren gemäß Anspruch 1,
wobei die Schwingungsmessgrößen der Wickelköpfe (2) an mindestens acht und maximal zwölf gleichmäßig über den Umfang jeder der Wickelköpfe (2) verteilten und jeweils in derselben Axialposition angeordneten Messstellen (5) erfasst werden.

3. Verfahren gemäß Anspruch 1 oder 2,
wobei der Stator (1) ein Blechpaket (3) aufweist und das Verfahren folgende Schritte aufweist:
- Erfassen von Schwingungsmessgrößen, mit denen die Ellipsierungsschwingungsmode des Blechpakets (3) bestimmbar ist in Abhängigkeit von der Zeit und zeitgleich mit dem Erfassen der Schwingungsmessgrößen, mit denen die Ellipsierungsschwingungsmoden der beiden Wickelköpfe (2) bestimmbar sind;
- Ermitteln von weiteren kritischen Betriebszuständen der elektrischen Maschine, bei denen die Ellipsenneigungen und die Phasenlagen der Ellipsierschwingungsmoden des Blechpakts (3) und mindestens einer der Wickelköpfe (2) im Wesentlichen gleich sind;
- Betreiben der elektrischen Maschine derart, dass die weiteren kritischen Betriebszustände mittels einer Variation der Blindleistung vermieden werden.

4. Verfahren gemäß Anspruch 3,
wobei die Schwingungsmessgrößen des Blechpaktes (3) in einer Axialposition erfasst werden, die in der Mitte zwischen den beiden Wickelköpfen (2) liegt.

5. Verfahren gemäß Anspruch 3 oder 4,
wobei die Schwingungsmessgrößen des Blechpakets (3) an mindestens acht und maximal zwölf gleichmäßig über den Umfang des Wicklungskerns (3) verteilten und in derselben Axialposition angeordneten Messstellen (6) erfasst werden.

6. Verfahren gemäß einem der Ansprüche 1 bis 5, mit den Schritten:
- Erfassen des Polradwinkels (11) und des Phasenwinkels (12) der elektrischen Maschine;
- Erstellen eines Kennfelds, in dem die kritischen und die weiteren kritischen Betriebszustände der elektrischen Maschine in Abhängigkeit des Polradwinkels und des Phasenwinkels aufgetragen sind, und Vermeiden dieser Betriebszustände anhand des Kennfelds.

7. Verfahren gemäß einem der Ansprüche 1 bis 6,
wobei das Verfahren zum Bestimmen der Ellipsierungsschwingungsmoden den Schritt aufweist:
- Transformieren der Schwingungsmessgrößen in ein Frequenzspektrum.

8. Verfahren gemäß einem der Ansprüche 1 bis 7,
wobei die Schwingungsmessgrößen Auslenkungen, Geschwindigkeiten und/oder Beschleunigungen der Messstellen (5, 6) sind.

9. Verfahren gemäß Anspruch 8,
wobei die in radialer Richtung auftretenden Auslenkungen, die in radialer Richtung auftretenden Geschwindigkeiten und/oder die in radialer Richtung auftretenden Beschleunigungen erfasst werden.

10. Verfahren gemäß einem der Ansprüche 1 bis 9,
wobei die kritischen Betriebszustände und/oder die weiteren kritischen Betriebszustände durch eine Variation der Wirkleistung vermieden werden.
